# EUROPEAN PATENT SPECIFICATION

(11) **EP 4 008 915 B1**
(45) Date of publication and mention of the grant of the patent: **06.03.2024**
(21) Application number: 20211910.3
(22) Date of filing: 04.12.2020
(51) Int. Cl.: F16B 7/04, F16B 2/06, F16B 35/04, F16B 7/18

(54) **A FASTENING ARRANGEMENT AND A VEHICLE ARRANGEMENT**
BEFESTIGUNGSANORDNUNG UND FAHRZEUGANORDNUNG
AGENCEMENT DE FIXATION ET AGENCEMENT DE VÉHICULE

(43) Date of publication of application: 08.06.2022
(73) Proprietor: VOLVO TRUCK CORPORATION, 405 08 Göteborg (SE)
(72) Inventor: ZACHRISSON, Jan, 439 93 ONSALA (SE); PREIJERT, Stefan, 415 07 GÖTEBORG (SE)
(74) Representative: Kransell & Wennborg KB

(56) References cited:
- CN-U- 205 478 795
- CN-U- 210 343 977
- JP-A- H0 939 533
- JP-A- 2014 076 787
- US-A1- 2015 322 981

## Description

### TECHNICAL FIELD

The present disclosure relates to a fastening arrangement for retaining at least a first and a second mechanical part to each other. The present disclosure also relates to a vehicle arrangement and a vehicle. Although the fastening arrangement and vehicle arrangement will mainly be described in relation to a heavy-duty vehicle, i.e. a truck, they may also be applicable for other types of vehicles where at least two mechanical parts are retained to each other.

### BACKGROUND

Mechanical parts, such as e.g. frame axle suspension installations of a vehicle, are often subjected to high stresses and strains in different directions during operation of the vehicle. The frame axle suspension is often connected to a frame axle using e.g. a U-bolt. Hereby, the U-bolt is connecting the suspension to the axle by surrounding these parts and fixated by two nuts on each leg of the U-bolt.

CN 205478795 presents such a conventional U-bolt for connecting mechanical parts to each other. The U-bolt in CN 205478795 comprises two longitudinally extending legs which are adapted to receive a nut, or similar, for fixating the mechanical parts within the u-shaped portion.

Although the conventional U-bolt in CN 205478795 solves the overall problem of robustly fixating mechanical parts to each other, it is still in need of further improvements. In particular, the U-bolt in CN 205478795 is in many applications in need of reducing generated stresses and strains, as this type of fastening arrangement is exposed to rather severe loads during operation of the vehicle.

Furthermore, JP H09 39533 A also relates to a U-bolt. The U-bolt is used for suspending a leaf spring arrangement of a vehicle. The U-bolt providing a structure capable of changing the fitting angle of inclination of the U-bolt.

### SUMMARY

It is an object of the present disclosure to describe a fastening arrangement which at least partially overcomes the above described deficiencies. This is achieved by a fastening arrangement according to claim 1.

According to a first aspect, there is provided a fastening arrangement for retaining at least a first mechanical part and a second mechanical part to each other, the fastening arrangement comprising a first elongated leg member, a second elongated leg member and a curved member extending between the first and second elongated leg members, wherein the first elongated leg member, the second elongated leg member and the curved member form an inner space arranged to accommodate at least a part of the first and second mechanical parts, the curved member comprises an inner surface arranged to face a surface of the first mechanical part, the inner surface being formed by an inner portion, a first outer portion and a second outer portion, wherein the first outer portion is arranged between the inner portion and the first elongated leg member, and the second outer portion is arranged between the inner portion and the second elongated leg member, wherein each of the first and second elongated leg members comprises a portion arranged to receive a respective tightening element for retaining the first and second mechanical parts to each other, wherein the first and second outer end portions of the inner surface of the curved member comprises a concave surface portion as seen in a cross-section transverse to the extension of the curved member, and wherein the inner portion of the inner surface of the curved member comprises a flat surface portion as seen in the cross-section transverse to the extension of the curved member.

The curved member should preferably be construed as forming an integral part with the first and second elongated leg members. Thus, the portion arranged to receive the tightening element is arranged on an opposite end of the elongated leg members compared to the curved member. The curved member may be arranged in different forms as will be evident below with the description of example embodiments.

The curved member thus, as is described above, comprises an outer surface and an inner surface, where the inner surface, together with the longitudinal extending legs, forms the inner space accommodating the mechanical parts to retain. The outer surface is on the other hand positioned at an opposite side of the curved member, and has a surface normal directed away from the first mechanical part in an assembled configuration.

The concave surface portion of the curved member may be formed in a number of different manners. The concave surface portion should also be construed as a geometry where, as seen in the transversal cross-section, the center is located further away from the first mechanical part compared to the longitudinal edge portions of the curved member.

The inventors of the present disclosure have unexpectedly realized that a fastening arrangement of the type described above, i.e. a fastening arrangement comprising a curved member with an inner surface that assumes a concave geometric configuration, is able to substantially reduce stress- and strain concentrations at the relatively exposed curved member. Stress concentrations are critical and should preferably be avoided for increasing the overall operational lifetime of the fastening elements, as stress concentrations are a major contributor to fatigue cracks, etc. The stresses exposed to the fastening arrangement will, by this inventive configuration, be more evenly distributed over a larger contact area along the length of the curved member. Also, the present configuration presents a fastening arrangement which is less sensitive to the loads it is exposed to when tightening the tightening elements. Contact pressure arising at the inner surface when connecting the fastening element to the first mechanical part and actual tension, generated due to operation of the vehicle, of the curved member can be clearly separated from each other. The present disclosure thus presents a more robust fastening arrangement.

According to an example embodiment, the curved member may be semi-circular along its extension. Hereby, compared to a substantially flat configuration, the stress distribution can be even further improved, thus reducing stress concentrations at critical areas. According to a still further example embodiment, the curved member may be U-shaped along its extension. Hence, the U-shape extends from the first elongated leg member to the second elongated leg member.

According to an example embodiment, the fastening arrangement may further comprise a mating support element, the mating support element comprising a first surface arranged in abutment with the inner surface of the curved member, and a second surface configured to abut the surface of the first mechanical member. Accordingly, the mating support element should be construed as an intermediate member arranged between the curved member and the first mechanical part. By means of the mating support element, an improved connection is provided for properly securing the first and second mechanical parts to each other.

According to an example embodiment, the first surface of the mating support element may comprise a convex surface portion. According to an example embodiment, the convex surface portion may have a shape fitting the shape of the concave surface portion of the curved member. Hereby, stress concentrations are even further reduced. Preferably, the radius of the convex surface portion should be smaller compared to the radius of the convex surface portion, for properly fitting the surface portions to each other.

According to an example embodiment, the concave surface portion may extend between transversal end positions of the curved member. The transversal end positions should be construed as the outer end portions on the left- and right hand side of the inner surface of the curved member as seen in the cross-section transverse to the extension of the curved member.

According to an example embodiment, the longitudinally extending legs may each be arranged with a circular cross-section. According to an example embodiment, the portion of the first and second elongated leg members may be a threaded portion. According to an example embodiment, the tightening element may be a nut arranged to be tightened on the thread portion. Hereby, a well-defined interface is provided for tightening the fastening arrangement such that the first and second mechanical parts are properly retained to each other.

According to a second aspect, there is provided a vehicle arrangement comprising a first mechanical part, a second mechanical part and a fastening arrangement retaining the first and second mechanical part to each other, the fastening arrangement being according to the first aspect.

Effects and features of the second aspect are largely analogous to those described above in relation to the first aspect.

According to a third aspect, there is provided a vehicle comprising a first and a second mechanical part, and a fastening arrangement according to any one of the embodiments described above in relation to the first aspect, wherein the fastening arrangement is retaining the first and second mechanical parts to each other.

According to an example embodiment, the first mechanical part may be a wheel axle suspension component and the second mechanical part may be a wheel axle.

Effects and features of the third aspect are largely analogous to those described above in relation to the first aspect.

Further features of, and advantages will become apparent when studying the appended claims and the following description. The skilled person will realize that different features may be combined to create embodiments other than those described in the following, without departing from the scope of the present disclosure.

### BRIEF DESCRIPTION OF THE DRAWINGS

The above, as well as additional objects, features and advantages, will be better understood through the following illustrative and non-limiting detailed description of exemplary embodiments, wherein:
Fig. 1 is a lateral side view illustrating a vehicle comprising mechanical parts particularly suitably retained by the fastening arrangement according to an example embodiment;
Figs. 2a - 2b are perspective views of the fastening arrangement retaining two mechanical parts to each other according to an example embodiment;
Figs. 3a - 3b are exploded views of the fastening arrangement according to an example embodiment not according to the invention; and
Figs. 4a - 4b are perspective views of the fastening arrangement according to an example embodiment according to the invention.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

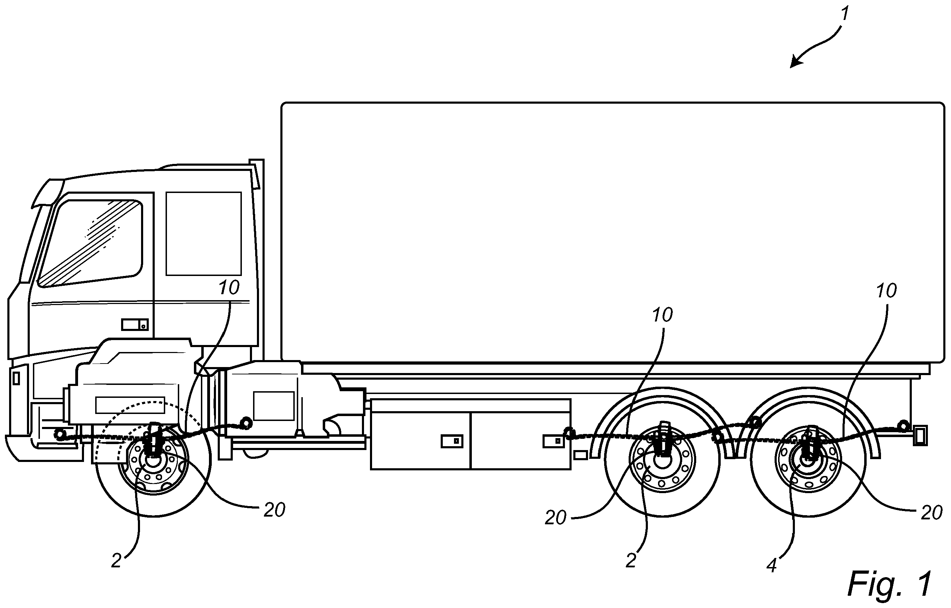

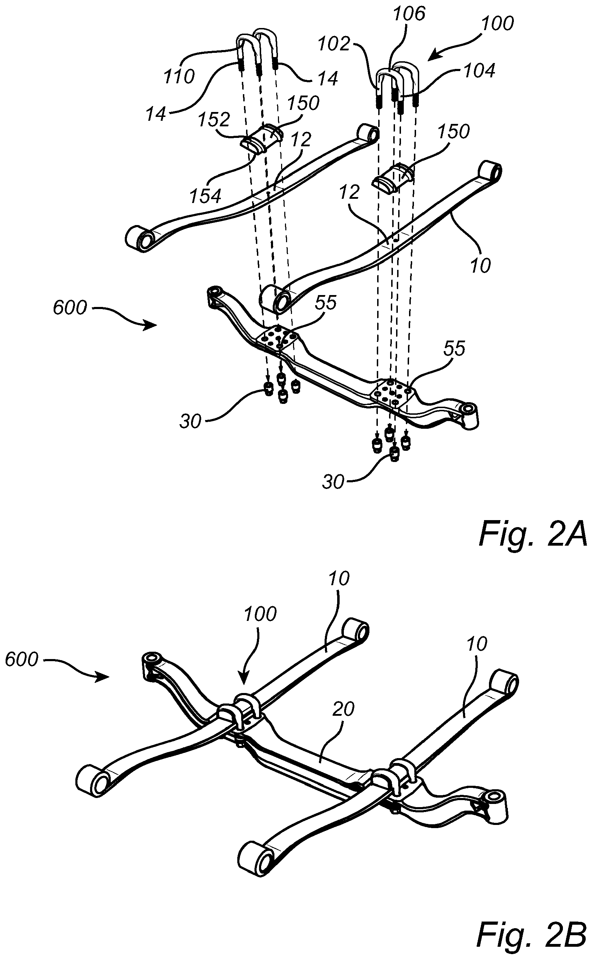

With particular reference to Fig. 1, there is provided a vehicle 1 in the form of a truck. The vehicle 1 comprises wheels 2, 4 arranged on a respective wheel axle 20. The vehicle 1 further comprises a wheel axle suspension arrangement 10. The wheel axle 20 and the wheel axle suspension arrangement 30 thus form mechanical parts of the vehicle. According to an example embodiment described in further detail below with reference to Figs. 2a - 2b, the wheel axle 20 is retained to the wheel axle suspension arrangement 10 by means of a fastening arrangement 100 (see Figs. 2a-4b). The vehicle 1 hereby comprises a vehicle arrangement 600 which comprises the wheel axle 20, the wheel axle suspension arrangement 30 and the fastening arrangement 100.

In order to describe the fastening arrangement 100 and its interconnection to the mechanical parts, i.e. the wheel axle 20 and the wheel axle suspension arrangement 10 reference is made to Figs. 2a - 2b. As can be seen, the fastening arrangement 100 comprises a first 102 and a second 104 elongated leg member and a curved member 106 extending between the elongated leg members. The curved member 106 is in the examples depicted as being U-shaped along its extension between the first 102 and second 104 leg members, although the curved member can be arranged in other semi-circular configurations. Each leg member further comprises a portion 14, preferably threads, arranged to receive a tightening element 30, preferably a nut, for retaining the wheel axle 20 and the wheel axle suspension arrangement 10 to each other. In detail, the U-shaped curved member 106 together with the elongated leg members 102, 104 surrounds the wheel axle 20 and the wheel axle suspension arrangement 10, whereby the nuts, which are arranged on an opposite end of the fastening arrangement 100 compared to the U-shaped curved member, are tightened to provide a compression force between the wheel axle 20 and the wheel axle suspension arrangement 10, thereby fixating the wheel axle 20 and the wheel axle suspension arrangement 10 to each other. According to the example embodiment depicted in Figs 2a - 2b, the elongated leg members are directed through openings/holes 55 of the wheel axle 20.

The fastening arrangement 100 depicted in the example embodiment of Figs. 2a - 2b further comprises a mating support element 150. The mating support element 150 is positioned between the U-shaped curved member 106 and the wheel axle suspension arrangement 10. In particular, the mating support element comprises a first surface 152 arranged in abutment with an inner surface 110 of the curved member, and a second surface 154 arranged in abutment with an upward facing surface 12 of the wheel axle suspension arrangement 10.

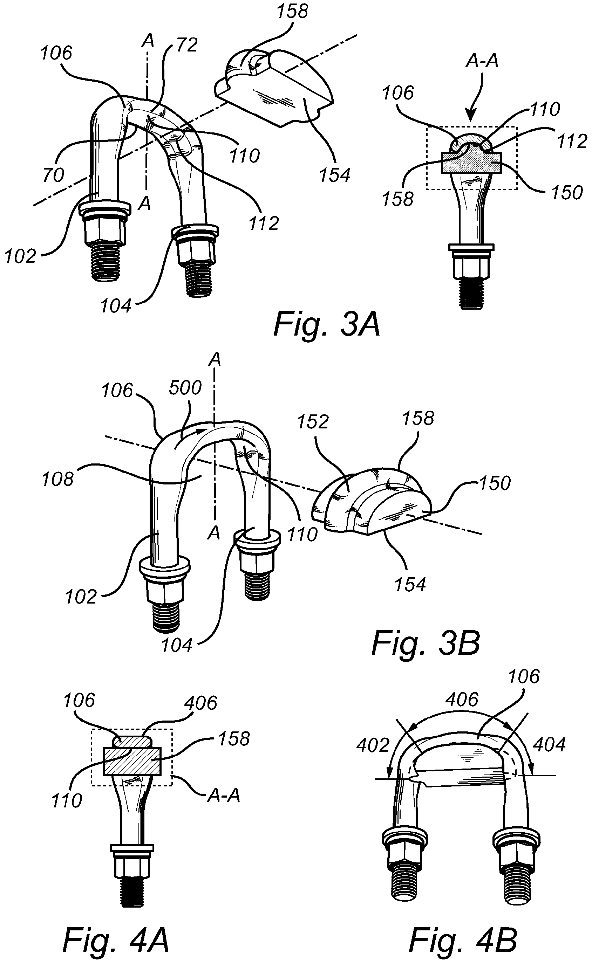

In order to describe the U-shaped curved portion 106 and the mating support element 150 in further detail, reference is now made to Figs. 3a - 3b which illustrate exploded views of the fastening arrangement 100 according to an example embodiment not according to the invention.

As can be seen, the first elongated leg member 102, the second elongated leg member 104 and the U-shaped curved member 106 form an inner space 108 arranged to accommodate a portion of the wheel axle 20 and the wheel axle suspension arrangement 10, respectively. The curved member 106 comprises the above described inner surface 110 facing the upward surface 12 of the wheel axle suspension arrangement 10 when retaining the wheel axle suspension arrangement 10 and the wheel axle 20 to each other.

As can be seen in detail in Fig. 3a, the inner surface 110 of the U-shaped curved member 106 comprises a concave surface portion 112. The inner surface 110 is thus concave as seen in a cross-section which is transverse to the extension 500 of the U-shaped curved member 106, i.e. transverse to the extension between the first elongated leg member 102 and the second elongated leg member 104.The In the example embodiment depicted in Fig. 3a, the entire inner surface 110 along the extension 500 of the U-shaped curved member 106 is concave, which concave configuration is also detailed in the cross-section A - A of Fig. 3a. However, other configurations are according to the invention as will be evident with reference to the below description in relation to Figs. 4a - 4b.

Furthermore, the concave surface portion 112 preferably extends between transversal end 70, 72 positions of the U-shaped curved member 106. Thus, the curvature of the concave surface portion 112 is initiated at a first transversal end position 70 and ends at an oppositely located second transversal end portion 72. With the configuration depicted in Fig. 3a, i.e. with a concave shape along the entire inner surface 110, the concave surface portion 112 preferably extends between the transversal end 70, 72 positions along the entire inner surface 110.

With particular reference to Fig. 3b, the mating support element 150 comprises a convex surface portion 158. In particular, the first surface 152 of the mating support element 150 comprises the convex surface portion 158. The convex surface portion 158 is configured to mate with the convex surface portion 112 of the U-shaped curved member. The shape of the convex surface portion 158 should thus preferably be designed to fit the shape of the concave surface portion. Hereby, local stress concentrations can be avoided. For simplifying the connection between the convex surface portion and the convex surface portion, the radius of the convex surface portion should be substantially the same as the radius of the convex surface portion. More preferably, the radius of the convex surface portion should be smaller compared to the radius of the convex surface portion.

However, as is readily understood, the fastening arrangement 100 can be arranged to retain the wheel axle 20 and the wheel axle suspension arrangement 10 without the use of the mating support element 150. In such a case, the inner surface 110 of the U-shaped curved member 106 is arranged in abutment with the upward facing surface 12 of the wheel axle suspension arrangement 10. Preferably, the upward facing surface 12 of the wheel axle suspension arrangement 10 in such a case comprises a convex surface portion fitting the shape of the convex surface portion 112 of the U-shaped curved member 106.

In order to describe an example embodiment of the fastening arrangement 100 according to the invention, reference is made to Figs. 4a - 4b. In comparison to the illustration of Figs. 3a - 3b, and which was described above, the concave surface portion 112 is not arranged at the entire inner surface of the U-shaped curved member 106. Conversely, inner surface 110 comprises a concave surface portion at a first longitudinal outer end portion 402 and a second longitudinal outer end portion 404, while the inner surface 110 at an inner longitudinal portion 406 is substantially flat. The first 402 and second 404 longitudinal outer end portions should be construed as end portions as seen along the extension of the U-shaped curved member 106, while the inner longitudinal portion 406 is arranged between the first 402 and second 404 longitudinal outer end portions. The concave shape is here preferably gradually reduced from the elongated leg towards the inner longitudinal portion 406.

It is to be understood that the present disclosure is not limited to the embodiments described above and illustrated in the drawings; rather, the skilled person will recognize that many changes and modifications may be made within the scope of the appended claims. For example, the wheel axle suspension arrangement 10 and the wheel axle 20 may be arranged on opposite sides to each other compared to the illustrated example embodiments, i.e. the wheel axle 20 is arranged above the wheel axle suspension arrangement 10, whereby the concave surface portion or the mating support element 150 is arranged in abutment with the wheel axle 20 instead of the wheel axle suspension arrangement 10.

## Claims

1. A fastening arrangement (100) for retaining at least a first mechanical part (10) and a second mechanical part (20) to each other, the fastening arrangement comprising a first elongated leg member (102), a second elongated leg member (104) and a curved member (106) extending between the first and second elongated leg members, wherein the first elongated leg member, the second elongated leg member and the curved member form an inner space (108) arranged to accommodate at least a part of the first and second mechanical parts, the curved member comprises an inner surface (110) arranged to face a surface (12) of the first mechanical part, the inner surface being formed by an inner portion (406), a first outer portion (402) and a second outer portion (404), wherein the first outer portion (402) is arranged between the inner portion (406) and the first elongated leg member (102), and the second outer portion (404) is arranged between the inner portion (406) and the second elongated leg member (104), wherein each of the first and second elongated leg members comprises a portion (14) arranged to receive a respective tightening element (30) for retaining the first and second mechanical parts to each other, **characterized in that** the first (402) and second (404) outer end portions of the inner surface (110) of the curved member comprises a concave surface portion (112) as seen in a cross-section transverse to the extension of the curved member, and wherein the inner portion (406) of the inner surface (110) of the curved member comprises a flat surface portion as seen in the cross-section transverse to the extension of the curved member.

2. The fastening arrangement according to claim 1, wherein the curved member is semi-circular along its extension.

3. The fastening arrangement according to any one of claims 1 or 2, wherein the curved member is U-shaped along its extension.

4. The fastening arrangement according to any one of the preceding claims, wherein the fastening arrangement further comprises a mating support element (150), the mating support element comprising a first surface (152) arranged in abutment with the inner surface of the curved member, and a second surface (154) configured to abut the surface (12) of the first mechanical member.

5. The fastening arrangement according to claim 4, wherein the first surface of the mating support element comprises a convex surface portion.

6. The fastening arrangement according to claim 5, wherein the convex surface portion has a shape fitting the shape of the concave surface portion of the curved member.

7. The fastening arrangement according to any one of the preceding claims, wherein the concave surface portion extends between transversal end positions of the curved member.

8. The fastening arrangement according to any one of the preceding claims, wherein the first and second elongated leg members are each arranged with a circular cross-section.

9. The fastening arrangement according to any one of the preceding claims, wherein the portion (14) of the first and second elongated leg members is a threaded portion.

10. The fastening arrangement according to claim 9, wherein the tightening element (30) is a nut arranged to be tightened on the thread portion.

11. A vehicle arrangement (600) comprising a first mechanical part, a second mechanical part and a fastening arrangement according to any one of the preceding claims retaining the first and second mechanical part to each other.

12. A vehicle comprising a first (10) and a second (20) mechanical part, and a fastening arrangement (100) according to any one of claims 1 - 10, wherein the fastening arrangement (100) is retaining the first and second mechanical parts to each other.

13. The vehicle according to claim 12, wherein the first mechanical part is a wheel axle suspension component and the second mechanical part is a wheel axle.

## Patentansprüche

1. Befestigungsanordnung (100) zum Halten von mindestens einem ersten mechanischen Teil (10) und einem zweiten mechanischen Teil (20), die Befestigungsanordnung umfassend ein erstes längliches Schenkelelement (102), ein zweites längliches Schenkelelement (104) und ein gekrümmtes Element (106), das sich zwischen dem ersten und dem zweiten länglichen Schenkelelement erstreckt, wobei das erste längliche Schenkelelement, das zweite längliche Schenkelelement und das gekrümmte Element einen Innenraum (108) bilden, der so angeordnet ist, dass er mindestens einen Teil des ersten und des zweiten mechanischen Teils aufnimmt, wobei das gekrümmte Element eine Innenfläche (110) umfasst, die so angeordnet ist, dass sie einer Oberfläche (12) des ersten mechanischen Teils zugewandt ist, wobei die Innenfläche durch einen inneren Abschnitt (406), einen ersten äußeren Abschnitt (402) und einen zweiten äußeren Abschnitt (404) gebildet wird, wobei der erste äußere Abschnitt (402) zwischen dem inneren Abschnitt (406) und dem ersten länglichen Schenkelelement (102) angeordnet ist, und der zweite äußere Abschnitt (404) zwischen dem inneren Abschnitt (406) und dem zweiten länglichen Schenkelelement (104) angeordnet ist, wobei sowohl das erste als auch das zweite längliche Schenkelelement einen Abschnitt (14) umfasst, der so angeordnet ist, dass er ein jeweiliges Spannelement (30) aufnimmt, um den ersten und den zweiten mechanischen Teil aneinander zu halten, **dadurch gekennzeichnet, dass** der erste (402) und der zweite (404) äußere Endabschnitt der inneren Oberfläche (110) des gekrümmten Elements einen konkaven Oberflächenabschnitt (112) aufweist, gesehen in einem Querschnitt quer zur Erstreckung des gekrümmten Elements, und wobei der innere Abschnitt (406) der inneren Oberfläche (110) des gekrümmten Elements einen flachen Oberflächenabschnitt umfasst, gesehen in dem Querschnitt quer zur Erstreckung des gekrümmten Elements.

2. Befestigungsanordnung nach Anspruch 1, wobei das gekrümmte Element entlang seiner Erstreckung halbkreisförmig ist.

3. Befestigungsanordnung nach einem der Ansprüche 1 oder 2, wobei das gekrümmte Element entlang seiner Erstreckung U-förmig ist.

4. Befestigungsanordnung nach einem der vorhergehenden Ansprüche, wobei die Befestigungsanordnung ferner ein passendes Stützelement (150) umfasst, das passende Stützelement eine erste Oberfläche (152) umfasst, die so angeordnet ist, dass sie an der Innenfläche des gekrümmten Elements anliegt, und eine zweite Oberfläche (154), die so konfiguriert ist, dass sie an der Oberfläche (12) des ersten mechanischen Elements anliegt.

5. Befestigungsanordnung nach Anspruch 4, wobei die erste Oberfläche des passenden Stützelements einen konvexen Oberflächenabschnitt umfasst.

6. Befestigungsanordnung nach Anspruch 5, wobei der konvexe Oberflächenabschnitt eine Form aufweist, die der Form des konkaven Oberflächenabschnitts des gekrümmten Elements entspricht.

7. Befestigungsanordnung nach einem der vorhergehenden Ansprüche, wobei sich der konkave Oberflächenabschnitt zwischen quer verlaufenden Endpositionen des gekrümmten Elements erstreckt.

8. Befestigungsanordnung nach einem der vorhergehenden Ansprüche, wobei das erste und das zweite längliche Schenkelelement jeweils mit einem kreisförmigen Querschnitt angeordnet sind.

9. Befestigungsanordnung nach einem der vorhergehenden Ansprüche, wobei der Abschnitt (14) des ersten und zweiten länglichen Schenkelelements ein Gewindeabschnitt ist.

10. Befestigungsanordnung nach Anspruch 9, wobei das Spannelement (30) eine Mutter ist, die zum Anziehen auf dem Gewindeabschnitt angeordnet ist.

11. Fahrzeuganordnung (600) mit einem ersten mechanischen Teil, einem zweiten mechanischen Teil und einer Befestigungsanordnung nach einem der vorhergehenden Ansprüche, die das erste und das zweite mechanische Teil aneinander festhält.

12. Fahrzeug mit einem ersten (10) und einem zweiten (20) mechanischen Teil und einer Befestigungsanordnung (100) nach einem der Ansprüche 1-10, wobei die Befestigungsanordnung (100) das erste und das zweite mechanische Teil aneinander festhält.

13. Fahrzeug nach Anspruch 12, wobei das erste mechanische Teil eine Radachsaufhängungskomponente und das zweite mechanische Teil eine Radachse ist.

## Revendications

1. Agencement de fixation (100) destiné à retenir au moins une première pièce mécanique (10) et une seconde pièce mécanique (20) l'une à l'autre, l'agencement de fixation comprenant un premier élément pied allongé (102), un second élément pied allongé (104) et un élément courbé (106) s'étendant entre les premier et second éléments pieds allongés, le premier élément pied allongé, le second élément pied allongé et l'élément courbé formant un espace intérieur (108) conçu pour loger au moins une partie des première et seconde pièces mécaniques, l'élément courbé comprenant une surface intérieure (110) conçue pour être tournée vers une surface (12) de la première pièce mécanique, la surface intérieure étant formée d'une section intérieure (406), d'une première section extérieure (402) et d'une seconde section extérieure (404), la première section extérieure (402) étant disposée entre la section intérieure (406) et le premier élément pied allongé (102), et la seconde section extérieure (404) étant disposée entre la section intérieure (406) et le second élément pied allongé (104), chacun des premier et second éléments pieds allongés comprenant une section (14) conçue pour recevoir un élément de serrage respectif (30) destiné à retenir les première et seconde pièces mécaniques l'une à l'autre, **caractérisé en ce que** les première (402) et seconde (404) sections terminales extérieures de la surface intérieure (110) de l'élément courbé comprennent une section de surface concave (112) vue dans un sens transversal à l'extension de l'élément courbé, et la section intérieure (406) de la surface intérieure (110) de l'élément courbé comprenant une section de surface plate vue dans le sens transversal à l'extension de l'élément courbé.

2. Agencement de fixation selon la revendication 1, dans lequel l'élément courbé est semi-circulaire le long de son extension.

3. Agencement de fixation selon l'une quelconque des revendications 1 ou 2, dans lequel l'élément courbé est en forme de U le long de son extension.

4. Agencement de fixation selon l'une quelconque des revendications précédentes, dans lequel l'agencement de fixation comprend en outre un élément support correspondant (150), l'élément support correspondant comprenant une première surface (152) disposée en butée avec la surface intérieure de l'élément courbé, et une seconde surface (154) configurée pour buter contre la surface (12) du premier élément mécanique.

5. Agencement de fixation selon la revendication 4, dans lequel la première surface de l'élément support correspondant comprend une section de surface convexe.

6. Agencement de fixation selon la revendication 5, dans lequel la section de surface convexe a une forme à correspondant à la forme de la section de surface concave de l'élément courbé.

7. Agencement de fixation selon l'une quelconque des revendications précédentes, dans lequel la section de surface concave s'étend entre des positions terminales transversales de l'élément courbé.

8. Agencement de fixation selon l'une quelconque des revendications précédentes, dans lequel les premier et second éléments pieds allongés sont chacun conçus avec une section transversale circulaire.

9. Agencement de fixation selon l'une quelconque des revendications précédentes, dans lequel la section (14) des premier et second éléments pieds allongés est une section filetée.

10. Agencement de fixation selon la revendication 9, dans lequel l'élément de serrage (30) est un écrou conçu pour être serré sur la section filetée.

11. Agencement de véhicule (600) comprenant une première pièce mécanique, une seconde pièce mécanique et un agencement de fixation selon l'une quelconque des revendications précédentes retenant les première et seconde pièces mécaniques l'une à l'autre.

12. Véhicule comprenant une première (10) et une seconde (20) pièce mécanique, et un agencement de fixation (100) selon l'une quelconque des revendications 1 à 10, l'agencement de fixation (100) retenant les première et seconde pièces mécaniques l'une à l'autre.

13. Véhicule selon la revendication 12, dans lequel la première pièce mécanique est un composant de suspension d'essieu de roue et la seconde pièce mécanique est un essieu de roue.
